# EUROPEAN PATENT APPLICATION

(11) **EP 4 079 804 A1**
(43) Date of publication of application: **26.10.2022**
(21) Application number: 20901700.3
(22) Date of filing: 24.11.2020
(51) Int. Cl.: C08L 7/00, B60C 1/00, C08K 3/013, C08K 3/04, C08K 3/36, C08K 5/053, C08K 5/103, C08K 5/1545, C08K 5/541

(54) **RUBBER COMPOSITION AND TIRE**

(30) Priority: 18.12.2019 JP 2019227809
(71) Applicant: BRIDGESTONE CORPORATION, Chuo-ku Tokyo 104-8340 (JP)
(72) Inventor: OGIWARA Akiko, Tokyo 104-8340 (JP); SHODA Yasuhiro, Tokyo 104-8340 (JP); YANAI Kenjiro, Tokyo 104-8340 (JP)
(74) Representative: Marks & Clerk LLP
(86) International application number: PCT/JP2020/043692
(87) International publication number: WO 2021/124811

(57) **Abstract**

Provided is a rubber composition being excellent in cut resistance while maintaining good elongation fatigue resistance. The rubber composition of the present disclosure contains a rubber component containing 70 % by mass or more of natural rubber, a filler containing at least silica, and a cyclic polyol compound having a hydrocarbyl group of 0.1 parts by mass to 2 parts by mass with respect to 100 parts by mass of the natural rubber in the rubber component.

## Description

### TECHNICAL FIELD

This disclosure relates to a rubber composition and a tire.

### BACKGROUND

Various components are used as additives in rubber compositions to improve the performance of rubber compositions and crosslinked rubber obtained by cross-linking the rubber compositions.

For example, JP H07-118457 A (PTL 1) describes a technique for improving the adhesiveness in vulcanization adhesion with a steel cord and the hardness of rubber by blending (B) 0.5 parts by weight to 10 parts by weight of carbohydrate, (C) 0.5 parts by weight to 10 parts by weight of methoxylated methylol melamine resin, and (D) 0.05 parts by weight to 1 part by weight of cobalt carboxylate as a cobalt content with respect to (A) 100 parts by weight of rubber selected from natural rubber, styrene/butadiene copolymer rubber, butadiene rubber, isoprene rubber, acrylonitrile butadiene copolymer rubber, chloroprene rubber, butyl rubber and halogenated butyl rubber.

Further, JP 2016-47888 A (PTL 2) describes a technique for achieving both wear resistance and wet and on-ice performance by containing a specific diene-based rubber, and silica whose glass transition point and CTAB adsorption specific surface area are specified in specific ranges in a rubber composition.

However, the technique described in PTL 1 is inferior in cut resistance and wear resistance under high severity conditions, and it is desired to further improve the technique in consideration of application to rubber articles such as tires.

Further, the elasticity of the rubber composition is low in the technique described in PTL 2, so that the effects on the cut resistance and wear resistance of the rubber composition after vulcanization are insufficient. It is desired to further improve the technique.

Therefore, a technique for adding a compound having a polyol structure such as sorbitol to a rubber composition has been developed in recent years to improve the cut resistance of a rubber composition.

With this technique, it is possible to obtain better cut resistance than conventional ones without deteriorating the physical properties such as low heat generating properties.

### CITATION LIST

### Patent Literature

PTL 1: JP H07-118457 A
PTL 2: JP 2016-47888 A

### SUMMARY

### (Technical Problem)

However, the technique of containing a compound such as sorbitol in a rubber composition may cause problems that agglomerates derived from the compound are formed and the presence of agglomerates deteriorates the elongation fatigue resistance of rubber. Therefore, it is desired to further improve the technique.

It could thus be helpful to provide a rubber composition being excellent in cut resistance while maintaining good elongation fatigue resistance. It is also helpful to provide a tire with excellent cut resistance while maintaining good elongation fatigue resistance.

### (Solution to Problem)

We have conducted diligent research to improve crack resistance and wear resistance. We found that, by containing a small amount of a cyclic polyol compound having a hydrocarbyl group in a rubber composition containing a large amount of natural rubber as a rubber component, it is possible to increase the strength of rubber and suppress aggregation in the rubber composition, thereby improving cut resistance while maintaining good elongation fatigue resistance.

That is, the rubber composition of the present disclosure contains a rubber component containing 70 % by mass or more of natural rubber, a filler containing at least silica, and a cyclic polyol compound having a hydrocarbyl group of 0.1 parts by mass to 2 parts by mass with respect to 100 parts by mass of the natural rubber in the rubber component.

With the above configuration, it is possible to realize excellent cut resistance while maintaining good elongation fatigue resistance.

For the rubber composition of the present disclosure, the cyclic polyol compound having a hydrocarbyl group is preferably a cyclic polyol compound having a hydrocarbyl ester group. This is because better elongation fatigue resistance and cut resistance can be realized in this case.

For the rubber composition of the present disclosure, the cyclic polyol compound having a hydrocarbyl group preferably has two or more hydroxyl groups. This is because better cut resistance can be realized in this case.

For the rubber composition of the present disclosure, the cyclic polyol compound having a hydrocarbyl group is preferably a compound represented by the following formula (1), 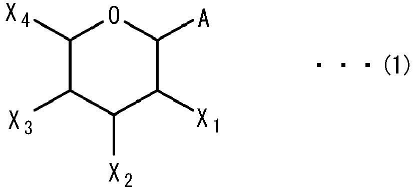 where A is a hydrocarbyl ester group having 6 to 30 carbon atoms or a hydrocarbyl ether group having 6 to 30 carbon atoms, and X₁, X₂, X₃ and X₄ are each independently -OH or -R (where -R is -H or -CH₂OH), provided that at least three of X₁, X₂, X₃ and X₄ are -OH, and the cyclic polyol compound having a hydrocarbyl group more preferably has 12 to 24 carbon atoms in the hydrocarbyl group portion of A in the formula (1). This is because better elongation fatigue resistance and cut resistance can be realized in this case.

For the rubber composition of the present disclosure, the cyclic polyol compound having a hydrocarbyl group preferably has a melting point of 40 °C to 100 °C. This is because the cut resistance at high temperatures can be further improved in this case.

For the rubber composition of the present disclosure, the content of the linear polyhydric alcohol is preferably 0.5 parts by mass to 6 parts by mass with respect to 100 parts by mass of the natural rubber in the rubber component. This is because better cut resistance can be realized while maintaining good elongation fatigue resistance in this case.

For the rubber composition of the present disclosure, the content of the silica is preferably 5 parts by mass to 100 parts by mass with respect to 100 parts by mass of the rubber component. This is because better cut resistance and reinforcing properties can be realized without deteriorating processability in this case.

For the rubber composition of the present disclosure, the filler preferably further contains carbon black, and the content of the carbon black with respect to the content of the silica is preferably 0.1 to 4 in mass ratio. This is because low heat generating properties and wear resistance can be improved in this case.

The rubber composition of the present disclosure preferably further contains a silane coupling agent, and the content of the silane coupling agent with respect to the content of the silica is preferably 0.2 or less in mass ratio. This is because better cut resistance can be realized in this case.

The rubber composition of the present disclosure preferably further contains polyethylene glycol. This is because processability can be further improved in this case.

The tire of the present disclosure uses the above-described rubber composition in a tread portion.

With the above configuration, it is possible to realize excellent cut resistance while maintaining good elongation fatigue resistance.

For the tire of the present disclosure, the tire is preferably a tire for construction vehicles. This is because the effects of improving elongation fatigue resistance and cut resistance bring considerable benefits in this case.

### (Advantageous Effect)

According to the present disclosure, it is possible to provide a rubber composition being excellent in cut resistance while maintaining good elongation fatigue resistance. Further, according to the present disclosure, it is possible to provide a tire with excellent cut resistance while maintaining good elongation fatigue resistance.

### DETAILED DESCRIPTION

The following specifically illustrates and describes embodiments of the present disclosure.

### <Rubber composition>

The rubber composition of the present disclosure is a rubber composition containing a rubber component containing 70 % by mass or more of natural rubber, a filler containing at least silica, and a cyclic polyol compound having a hydrocarbyl group of 0.1 parts by mass to 2 parts by mass with respect to 100 parts by mass of the rubber component.

### (Rubber component)

The rubber component contained in the rubber composition of the present disclosure contains 70 % by mass or more of natural rubber (NR). By containing 70 % by mass or more of natural rubber, excellent cut resistance, reinforcing properties, wear resistance and other performance can be obtained when the rubber component is used together with the cyclic polyol compound having a hydrocarbyl group, which will be described later.

The reason why the content of the natural rubber in the rubber component is set to 70 % by mass or more is that the cut resistance and wear resistance can be reliably improved when the rubber component is used together with the cyclic polyol compound having a hydrocarbyl group, which will be described later. From the same viewpoint, the content of the natural rubber in the rubber component is preferably 80 % by mass or more and more preferably 90 % by mass or more.

The rubber component may contain any synthetic rubber in addition to the natural rubber.

For example, the rubber component preferably contains a diene-based synthetic rubber from the viewpoint of obtaining excellent cut resistance and wear resistance.

Examples of the diene-based synthetic rubber include synthetic polyisoprene (IR), styrene-butadiene copolymer rubber (SBR), and polybutadiene rubber (BR). The diene-based synthetic rubber may be contained alone or as a combination of two or more in the rubber component. Further, the rubber component may contain a non-diene-based synthetic rubber depending on the required performance.

### (Cyclic polyol compound having a hydrocarbyl group)

In addition to the above-described rubber component, the rubber composition of the present disclosure further contains a cyclic polyol compound having a hydrocarbyl group of 0.1 parts by mass to 2 parts by mass with respect to 100 parts by mass of the natural rubber in the rubber component.

The cyclic polyol compound having a hydrocarbyl group contained in the rubber composition can greatly improve the cut resistance of the rubber composition of the present disclosure. Further, by enhancing the interaction between the rubber molecule of the rubber component and the agent described later, the physical properties of the rubber after crosslinking can be homogenized. As a result, the reinforcing properties and the wear resistance can be improved.

Further, the cyclic polyol compound having a hydrocarbyl group has fewer hydrophilic sites than a compound such as sorbitol, so that self-aggregation in the rubber composition can be suppressed. As a result, the rubber composition can keep good elongation fatigue resistance.

The content of the cyclic polyol compound having a hydrocarbyl group is 0.1 parts by mass to 2 parts by mass with respect to 100 parts by mass of the natural rubber. When the content is less than 0.1 parts by mass with respect to 100 parts by mass of the natural rubber, the amount of the cyclic polyol compound is small. As a result, the effects of improving cut resistance and the effects of elongation fatigue resistance are insufficient. On the other hand, when the content of the cyclic polyol compound having a hydrocarbyl group exceeds 2 parts by mass with respect to 100 parts by mass of the natural rubber, the amount of the cyclic polyol compound is too large. As a result, self-aggregation may occur in the rubber composition, which may lead to deterioration of elongation fatigue resistance.

From the same viewpoint, the content of the cyclic polyol compound having a hydrocarbyl group is preferably 0.1 parts by mass to 1.5 parts by mass and more preferably 0.3 parts by mass to 1.2 parts by mass with respect to 100 parts by mass of the natural rubber.

The cyclic polyol compound having a hydrocarbyl group preferably has two or more hydroxyl groups and preferably has three or more hydroxyl groups. This is because, by having a large number of hydroxyl groups, the interaction between the rubber component and additives is strengthened, and better cut resistance can be realized.

The cyclic polyol compound having a hydrocarbyl group is preferably a cyclic polyol compound having a hydrocarbyl ester group. This is because better elongation fatigue resistance and cut resistance can be realized in this case.

From the viewpoint of realizing better elongation fatigue resistance and cut resistance, the cyclic polyol compound having a hydrocarbyl group is more preferably a compound represented by the following formula (1),

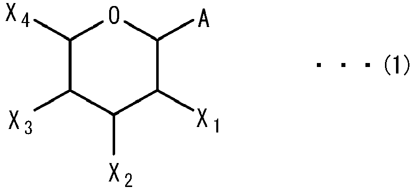

In the formula (1), A is a hydrocarbyl ester group having 6 to 30 carbon atoms or a hydrocarbyl ether group having 6 to 30 carbon atoms, where the number of carbon atoms in the hydrocarbyl group portion of A is preferably 12 to 24. When the number of carbon atoms of the hydrocarbyl group portion of A in the formula (1) is in the range of 12 to 24, the cut resistance is further improved while maintaining good elongation fatigue resistance.

For A in the formula (1), the first atom from the ring portion (that is, the atom bonded to the ring) or the second atom from the ring portion is preferably an oxygen atom. Examples of A in which the first atom from the ring portion is an oxygen atom include groups represented by -O-A' and -O-CO-A", and examples of A in which the second atom from the ring portion is an oxygen atom include groups represented by -CH₂-O-A" and -CH₂-O-CO-A A‴, where A' is preferably a hydrocarbyl group having 6 to 30 carbon atoms, A" is preferably a hydrocarbyl group having 5 to 29 carbon atoms, and A'" is preferably a hydrocarbyl group having 4 to 28 carbon atoms, and A', A" and A'" are more preferably hydrocarbyl groups having 12 to 24 carbon atoms.

In the formula (1), X₁, X₂, X₃ and X₄ are each independently -OH or - R (where -R is -H or -CH₂OH), provided that at least three of X₁, X₂, X₃ and X₄ are -OH. When three or more of X₁, X₂, X₃ and X₄ are -OH, the cut resistance of the rubber composition is further improved.

Among the compounds represented by the above formula (1), a compound represented by the following formula (2) or the formula (3) is more preferable, and a compound represented by the formula (2) is particularly preferable.

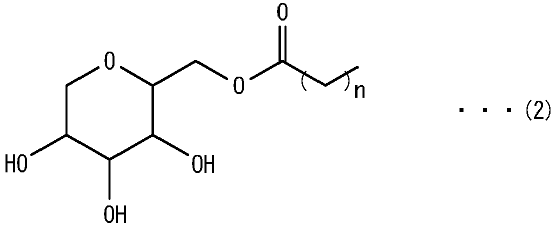

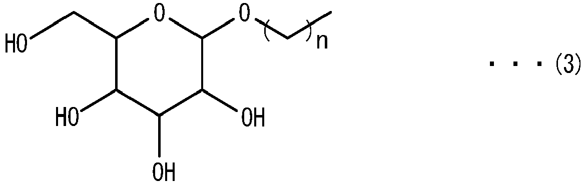

In the formulas (2) and (3), n is a natural number, which is preferably in a range of 11 to 23.

By blending the compound represented by the formula (2) or formula (3) as the modified cyclic polyol compound, it is possible to further improve the cut resistance while maintaining good elongation fatigue resistance.

The cyclic polyol compound having a hydrocarbyl group is not particularly limited. For example, it can be obtained by reacting a polyol compound, such as sorbitol, sorbitan, glucose and fructose, with an aliphatic alcohol, such as octanol, decanol, dodecanol, tetradecanol and hexadecanol, or an aliphatic carboxylic acid, such as lauric acid, myristic acid, palmitic acid, stearic acid and oleic acid.

Specific examples of the cyclic polyol compound having a hydrocarbyl group include ester compounds such as sorbitan monolaurate, sorbitan monomyristate, sorbitan monopalmitate, sorbitan monostearate and sorbitan monooleate, and ether compounds such as octyl-β-D-glucopyranoside, decyl-β-D-glucopyranoside, dodecyl-β-D-glucopyranoside, tetradecyl-P-D-glucopyranoside and hexadecyl-β-D-glucopyranoside. These compounds may be used alone or in combination of two or more.

From the viewpoint of realizing both elongation fatigue resistance and cut resistance at a higher level, the cyclic polyol compound having a hydrocarbyl group is preferably sorbitan monoester among these compounds.

The melting point of the cyclic polyol compound having a hydrocarbyl group is preferably 40 °C to 100 °C and more preferably 45 °C to 90 °C. This is because, when the melting point of the cyclic polyol compound having a hydrocarbyl group is 100 °C or lower, the solubility during kneading and vulcanization reaction can be improved, and when the melting point is 40 °C or higher, the cut resistance at high temperatures can be improved.

### (Linear polyhydric alcohol)

In addition to the above-described rubber component and cyclic polyol compound having a hydrocarbyl group, the rubber composition of the present disclosure preferably further contains a linear polyhydric alcohol.

By further containing the linear polyhydric alcohol, the cut resistance of the rubber composition can be further enhanced.

The linear polyhydric alcohol preferably has three or more hydroxyl groups and more preferably has five or more hydroxyl groups. This is because, by containing many hydroxyl groups in the linear polyhydric alcohol, better cut resistance and wear resistance can be realized.

The melting point of the linear polyhydric alcohol is preferably lower than 170 °C. This is because the solubility during kneading and vulcanization reaction can be improved in this case. Further, from the viewpoint of blocking properties, the melting point of the linear polyhydric alcohol is preferably 40 °C or higher.

The type of the linear polyhydric alcohol is not particularly limited and known linear polyhydric alcohols can be used. For example, from the viewpoint of realizing better cut resistance, it is preferable to use at least one selected from the group consisting of xylitol, sorbitol, mannitol and galactitol.

The content of the linear polyhydric alcohol is preferably 0.5 parts by mass to 6 parts by mass and more preferably 1 part by mass to 4 parts by mass with respect to 100 parts by mass of the natural rubber in the rubber component. When the content of the linear polyhydric alcohol is 0.5 parts by mass or more with respect to 100 parts by mass of the natural rubber, it is possible to obtain better cut resistance. When the content is 6 parts by mass or less with respect to 100 parts by mass of the natural rubber, it is possible to suppress a decrease in elongation fatigue resistance due to aggregation of the linear polyhydric alcohol.

### (Filler)

In addition to the above-described rubber component, cyclic polyol compound, and linear polyhydric alcohol as an optional component, the rubber composition of the present disclosure contains a filler containing at least silica.

By containing a filler containing silica together with the rubber component, properties such as low-cut properties and wear resistance can be improved.

Examples of the type of the silica include wet silica (hydrous silicic acid), dry silica (anhydrous silicic acid), calcium silicate, and aluminum silicate, among which wet silica is preferable. These silicas may be used alone or in combination of two or more.

The wet silica may be precipitated silica. The precipitated silica is silica obtained by aggregating primary particles by, at an initial stage of production, advancing the reaction of a reaction solution in a relatively high temperature and neutral to alkaline pH range to grow silica primary particles and then controlling them to acidic pH range.

The silica is not particularly limited, where, for example, the CTAB specific surface area (cetyltrimethylammonium bromide adsorption specific surface area) may be 70 m²/g or more and 250 m²/g or less. The CTAB specific surface area means a value measured according to ASTMD 3765-92. Note that the adsorption cross-sectional area per molecule of cetyltrimethylammonium bromide on the silica surface is 0.35 nm², and the specific surface area (m²/g) calculated from the adsorption amount of CTAB is defined as the CTAB specific surface area.

The BET specific surface area of the silica may be 100 m²/g or more and 250 m²/g or less. The BET specific surface area is a specific surface area obtained with the BET method, which can be measured according to ASTMD4820-93 in the present disclosure.

The content of the silica is preferably 5 parts by mass to 100 parts by mass, more preferably 10 parts by mass to 50 parts by mass, and further preferably 10 parts by mass to 45 parts by mass with respect to 100 parts by mass of the rubber component. When the content of the silica is 10 parts by mass or more with respect to 100 parts by mass of the rubber component, the cut resistance and steering stability can be further improved. When the content is less than 50 parts by mass, the deterioration of processability and low rolling resistance of the rubber composition can be suppressed.

The filler may further contain carbon black in addition to the above-described silica. The reinforcing properties and wear resistance of a tire can be further improved by containing carbon black.

The carbon black is not particularly limited, and examples thereof include GPF, FEF, HAF, N339, IISAF, ISAF, and SAF grade carbon black. Carbon black having a nitrogen adsorption specific surface area (N₂SA, measured according to JIS K 6217-2: 2001) of 20 m²/g to 250 m²/g may be used. Among these, ISAF and SAF grade carbon black are preferable from the viewpoint of improving the wear resistance of the rubber composition. These carbon blacks may be used alone or in combination of two or more.

The content of the carbon black is not particularly limited. It is preferably 5 parts by mass to 100 parts by mass, more preferably 10 parts by mass to 50 parts by mass, and still more preferably 10 parts by mass to 40 parts by mass with respect to 100 parts by mass of the rubber component. When the content of the carbon black is 5 parts by mass or more with respect to 100 parts by mass of the rubber component, the cut resistance can be further improved, and when it is less than 50 parts by mass, the heat generating properties can be suppressed.

The content of the carbon black is not particularly limited. The content of the carbon black with respect to the content of the silica (content of carbon black/content of silica) is preferably 0.1 to 4, more preferably 0.1 to 0.9, and still more preferably 0.2 to 0.7 in mass ratio. As other preferable examples, it is preferably 2 to 4 and more preferably 2.5 to 4.

When the content of the carbon black with respect to the content of the silica is 0.1 or more in mass ratio, it is possible to obtain better wear resistance and reinforcing properties. When the content of the carbon black with respect to the content of the silica is 4 or less in mass ratio, it is possible to obtain better cut resistance without deteriorating low heat generating properties.

In addition to the above-described silica and carbon black, the filler may also contain an inorganic compound represented by the following general formula (XX),

nM·xSiO_{Y}·zH₂O (XX)

(where M is at least one selected from metal selected from the group consisting of aluminum, magnesium, titanium, calcium and zirconium, oxides or hydroxides of these metals, hydrates thereof, and carbonates of these metals; and n, x, y and z are an integer of 1 to 5, an integer of 0 to 10, an integer of 2 to 5, and an integer of 0 to 10, respectively.)

Examples of the inorganic compound of the general formula (XX) include alumina (Al₂O₃) such as γ-alumina and α-alumina; alumina monohydrate (Al₂O_{3·}H₂O) such as boehmite and diaspore; aluminum hydroxide [Al(OH)₃] such as gibbsite and bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum oxide magnesium (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicate containing hydrogen, alkali metal or alkaline earth metal that corrects the charge like various zeolites.

From the viewpoint of the balance between wear resistance and wet performance, the inorganic compound of the general formula (XX) preferably has an average particle size of 0.01 µm to 10 µm and more preferably 0.05 µm to 5 µm.

The total content of the filler is not particularly limited, but it is preferably 20 parts by mass to 150 parts by mass, more preferably 30 parts by mass to 120 parts by mass, and particularly preferably 40 parts by mass to 100 parts by mass with respect to 100 parts by mass of the rubber component. This is because, by optimizing the amount of the filler, the properties of a tire such as cut resistance, low loss properties and wear resistance, for example, can be further improved.

### (Other components)

In addition to the above-described rubber component, cyclic polyol compound having a hydrocarbyl group, filler, and linear polyhydric alcohol as an optional component, the rubber composition of the present disclosure may contain compounding agents commonly used in the rubber industry as other components. Examples of the other component include a silane coupling agent, a cross-linking agent, a vulcanization accelerator, polyethylene glycol, a softener, a resin, an age resistor, and zinc oxide, which may be appropriately selected and contained if the effects of the present disclosure are not impaired. Commercially available products may be suitably used as these compounding agents.

When silica is contained as the above-described filler, it is preferable to further contain a silane coupling agent. This is because the effects of silica in terms of cut resistance, reinforcing properties, and low loss properties of can be further improved in this case. A known silane coupling agent may be appropriately used as the silane coupling agent.

Examples of the silane coupling agent include bis (3-triethoxysilylpropyl) tetrasulfide, bis (3-triethoxysilylpropyl) trisulfide, bis (3-triethoxysilylpropyl) disulfide, bis (2-triethoxysilylethyl) tetrasulfide, bis (3-trimethoxysilylpropyl) tetrasulfide, bis (2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis (3-diethoxymethylsilylpropyl) tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyl tetrasulfide. These silane coupling agents may be used alone or in combination of two or more.

The content of the silane coupling agent varies depending on the type of the silane coupling agent and the like, but it is preferably 0.2 or less, more preferably 0.1 or less, and still more preferably 0.05 or less in mass ratio with respect to the content of the silica. This is because the cut resistance of the rubber composition can be further improved by reducing the content of the silane coupling agent to 0.2 or less in mass ratio with respect to the content of the silica.

The cross-linking agent is not particularly limited and may be appropriately selected depending on the intended purpose. Examples thereof include a sulfur-based cross-linking agent, an organic peroxide-based crosslinking agent, an inorganic cross-linking agent, a polyamine cross-linking agent, a resin cross-linking agent, a sulfur compound-based cross-linking agent, and an oxime-nitrosamine-based cross-linking agent. For a rubber composition for tire, a sulfur-based cross-linking agent (vulcanizing agent) is more preferable among these cross-linking agents.

The content of the cross-linking agent is not particularly limited and may be appropriately selected depending on the intended purpose. It is preferably 0.1 parts by mass to 20 parts by mass with respect to 100 parts by mass of the rubber component.

When sulfur is used as the cross-linking agent, it is preferable to contain a vulcanization accelerator. The vulcanization accelerator may be a conventionally known one and is not particularly limited. Examples thereof include sulfenamide-based vulcanization accelerators such as CBS (N-cyclohexyl-2-benzothiadylsulfenamide), TBBS (N-t-butyl-2-benzothiadylsulfenamide) and TBSI (N-t-butyl-2-benzothiadylsulfenimide); guanidine-based vulcanization accelerators such as DPG (diphenylguanidine); thiuram-based vulcanization accelerators such as tetraoctylthiuram disulfide and tetrabenzylthiuram disulfide; and zinc dialkyldithiophosphate. The content is preferably less than the sulfur content, and more preferably about 1 part by mass to 10 parts by mass with respect to 100 parts by mass of the rubber component.

The rubber composition of the present disclosure preferably further contains glycerol monostearate from the viewpoint of shortening the scorch time and further improving the operability such as increasing the vulcanization rate during tire production.

The content of the glycerol monostearate is 0.1 parts by mass or more, preferably 0.3 parts by mass or more, and more preferably 0.5 parts by mass or more with respect to 100 parts by mass of the rubber component. When the content is less than 0.1 parts by mass, the effects of the present disclosure may be unsatisfactory. The content is 3.5 parts by mass or less, preferably 3 parts by mass or less, and more preferably 2.5 parts by mass or less. When the content exceeds 3.5 parts by mass, the scorch time tends to be too short.

The content of the polyethylene glycol is 0.1 parts by mass or more, preferably 0.3 parts by mass or more, and more preferably 0.5 parts by mass or more with respect to 100 parts by mass of the rubber component. When the content is less than 0.1 parts by mass, the effects of the present disclosure may be unsatisfactory. The content is 3.5 parts by mass or less, preferably 3 parts by mass or less, and more preferably 2.5 parts by mass or less. When the content exceeds 3.5 parts by mass, the scorch time tends to be too short.

The rubber composition of the present disclosure may also contain a softener from the viewpoint of increasing the flexibility of rubber and realizing better wet performance and on-ice performance. The softener may be a conventionally known one and is not particularly limited. Examples thereof include petroleum-based softeners such as aroma oil, paraffin oil and naphthenic oil, and plant-based softeners such as palm oil, castor oil, cottonseed oil, and soybean oil. These softeners may be appropriately selected and used, and they may be used alone or in combination of two or more.

When the softener is contained, it is preferable to contain one that is liquid at room temperature such as 25 °C among the above-described softeners from the viewpoint of ease of handling, and examples thereof include petroleum-based softeners such as aroma oil, paraffin oil and naphthenic oil.

The rubber composition of the present disclosure may contain a resin from the viewpoint of increasing the flexibility of rubber and realizing better wet performance and on-ice performance. Various natural resins and synthetic resins can be used as the resin. Specifically, it is preferable to use a rosin-based resin, a terpene-based resin, a petroleum-based resin, a phenolbased resin, a coal-based resin, a xylene-based resin, or the like. These resins may be used alone or in combination of two or more.

A method for producing the rubber composition of the present disclosure is not particularly limited. For example, the rubber composition may be obtained by blending and kneading the above-described rubber component, filler containing at least silica, cyclic polyol compound having a hydrocarbyl group, other optional components, and the like with a known method.

### <Tire>

The tire of the present disclosure uses the rubber composition of the present disclosure described above in a tread portion. By applying the rubber composition of the present disclosure to the tire tread portion, it is possible to realize excellent cut resistance while maintaining good elongation fatigue resistance.

The tire of the present disclosure is preferably used as a tire for construction vehicles, a tire for trucks and buses, or a tire for aircraft. This is because the rubber composition of the present disclosure to be used as a material of tread portion has excellent cut resistance and using it as a tire for construction vehicles brings considerable benefits.

The tire of the present disclosure is not particularly limited except that the rubber composition of the present disclosure described above is used in a tread portion of the tire, and the tire can be produced according to a conventional method. The gas to be filled in the tire may be an inert gas such as nitrogen, argon or helium, in addition to normal air or air whose oxygen partial pressure has been adjusted.

### EXAMPLES

The following describes the present disclosure in more detail with reference to examples, but the present disclosure is not limited to the following examples.

### (Examples 1-1 to 1-2 and Comparative Examples 1-1 to 1-3)

Samples of rubber composition were prepared by blending and kneading in a conventional manner according to the composition listed in Table 1.

The obtained samples were each subjected to vulcanization treatment and then to the following evaluations (1) and (2).

### (Example 1-1, Example 2-1, Comparative Example 1-1, and Comparative Examples 2-1 to 2-3)

Samples of rubber composition were prepared by blending and kneading in a conventional manner according to the composition listed in Table 2.

The obtained samples were each subjected to vulcanization treatment and then to the following evaluations (1) and (2).

### (Examples 3-1 to 3-2 and Comparative Example 3-1)

Samples of rubber composition were prepared by blending and kneading in a conventional manner according to the composition listed in Table 3.

The obtained samples were each subjected to vulcanization treatment and then to the following evaluations (1) and (2).

### (Examples 4-1 to 4-4 and Comparative Example 3-1)

Samples of rubber composition were prepared by blending and kneading in a conventional manner according to the composition listed in Table 4.

The obtained samples were each subjected to vulcanization treatment and then to the following evaluations (1) and (2).

### <Evaluation>

### (1) Cut resistance

After subjecting each sample of Examples and Comparative Examples to vulcanization treatment, a pure shear type test piece was prepared, a notch was made while the test piece was being pulled using a tensile test device (SHIMADZU CORPORATION), the state of crack growth was observed, and the energy release rate (transfer energy) at which the crack growth rate increased discontinuously was measured.

The evaluation was carried out by calculating the reciprocal of the measured transfer energy of each sample. In Table 1, the results of Examples 1-1 to 1-2 and Comparative Examples 1-2 to 1-3 are indicated as an index with the reciprocal of the transfer energy of the sample of Comparative Example 1-1 being 100. In Table 2, the result of Example 1-1 is indicated as an index with the reciprocal of the transfer energy of the sample of Comparative Example 1-1 being 100, the result of Example 2-1 is indicated as an index with the reciprocal of the transfer energy of the sample of Comparative Example 2-1 being 100, and the result of Comparative Example 2-3 is indicated as an index with the reciprocal of the transfer energy of the sample of Comparative Example 2-2 being 100. In Table 3, the results of Example 3-1 and Comparative Example 3-2 are indicated as an index with the reciprocal of the transfer energy of the sample of Comparative Example 3-1 being 100. In Table 4, the results of Examples 4-1 and 4-2 are indicated as an index with the reciprocal of the transfer energy of the sample of Comparative Example 4-1 being 100, the results of Examples 4-3 and 4-4 are indicated as an index with the reciprocal of the transfer energy of the sample of Comparative Example 4-2 being 100, the results of Examples 4-5 and 4-6 are indicated as an index with the reciprocal of the transfer energy of the sample of Comparative Example 4-3 being 100, and the results of Examples 4-7 and 4-8 are indicated as an index with the reciprocal of the transfer energy of the sample of Comparative Example 4-4 being 100. In Table 4, the transition energy was predicted by multiple regression analysis with the transition energy result of each of a plurality of samples in which the amount of sorbitan, the number of silica parts, the number of silane parts, the number of monogly parts, and the modulus were changed independently. In Tables 1 to 4, the larger the numerical value is, the better the cut resistance is.

### (2) Elongation fatigue resistance

After subjecting each sample of Examples and Comparative Examples to vulcanization treatment, a dumbbell-shaped test piece with a width of 6 mm was prepared, and a test was conducted in which the test piece was repeatedly pulled at 5 Hz with a 0.5 mm wide notch using a tensile test device (SHIMADZU CORPORATION).

For evaluation, the number of breaks was measured when the value of the common logarithm of the energy release rate was 4.3. In Table 1, the results of Examples 1-1 to 1-2 and Comparative Examples 1-2 to 1-3 are indicated as an index with the number of times until the test piece of Comparative Example 1-1 was broken being 100. In Table 2, the result of Example 1-1 is indicated as an index with the number of times until the test piece of Comparative Example 1-1 was broken being 100, the result of Example 2-1 is indicated as an index with the number of times until the test piece of Comparative Example 2-1 was broken being 100, and the result of Comparative Example 2-3 is indicated as an index with the number of times until the test piece of the sample of Comparative Example 2-2 was broken being 100. In Table 3, the results of Example 3-1 and Comparative Example 3-2 are indicated as an index with the number of times until the test piece of Comparative Example 3-1 was broken being 100. In Tables 1 to 3, the larger the numerical value is, the more the number of times until the fracture occurs is, the better the elongation fatigue resistance is.

**Table 1**

| | | | Comparative Example 1-1 | Example 1-1 | Example 1-2 | Comparative Example 1-2 | Comparative Example 1-3 |
|---|---|---|---|---|---|---|---|
| Components | Natural rubber ^{∗}1 | Part by mass | 100 | 100 | 100 | 100 | 100 |
| | Sorbitan monoester ^{∗}2 | | - | 1 | 2 | 4 | - |
| | Sorbitol ^{∗}3 | | - | - | - | - | 4 |
| | Carbon black ^{∗}4 | | 38 | 38 | 38 | 38 | 38 |
| | Silica ^{∗}5 | | 12 | 12 | 12 | 12 | 12 |
| | Age resistor ^{∗}6 | | 2 | 2 | 2 | 2 | 2 |
| | Silane coupling agent ^{∗}7 | | 1 | 1 | 1 | 1 | 1 |
| | Vulcanization accelerator ^{∗}8 | | 5 | 5 | 5 | 5 | 5 |
| | Sulfur | | 2 | 2 | 2 | 2 | 2 |
| Evaluation results | Cut resistance (index) | Index | 100 | 126 | 116 | 109 | 120 |
| | Elongation fatigue resistance (index) | Index | 100 | 106 | 105 | 92 | 40 |

**Table 2**

| | | | Comparative Example 1-1 | Example 1-1 | Comparative Example 2-1 | Example 2-1 | Comparative Example 2-2 | Comparative Example 2-3 |
|---|---|---|---|---|---|---|---|---|
| Components | Natural rubber ^{∗}1 | Part by mass | 100 | 100 | 70 | 70 | 30 | 30 |
| | Styrene butadiene rubber ^{∗}9 | | - | - | 30 | 30 | 70 | 70 |
| | Sorbitan monoester ^{∗}2 | | - | 1 | - | 1 | - | 1 |
| | Carbon black ^{∗}4 | | 38 | 38 | 38 | 38 | 38 | 38 |
| | Silica ^{∗}5 | | 12 | 12 | 12 | 12 | 12 | 12 |
| | Age resistor ^{∗}6 | | 2 | 2 | 2 | 2 | 2 | 2 |
| | Silane coupling agent ^{∗}7 | | 1 | 1 | 1 | 1 | 1 | 1 |
| | Vulcanization accelerator ^{∗}8 | | 5 | 5 | 5 | 5 | 5 | 5 |
| | Sulfur | | 2 | 2 | 2 | 2 | 2 | 2 |
| Evaluation results | Cut resistance (index) | Index | 100 | 126 | 100 | 131 | 100 | 96 |
| | Elongation fatigue resistance (index) | Index | 100 | 106 | 100 | 100 | 100 | 98 |

**Table 3**

| | | | Comparative Example 3-1 | Example 3-1 | Example 3-2 |
|---|---|---|---|---|---|
| Components | Natural rubber ^{∗}1 | Part by mass | 100 | 100 | 100 |
| | Sorbitan monoester ^{∗}2 | | - | 1 | 2 |
| | Carbon black ^{∗}4 | | 15 | 15 | 15 |
| | Silica ^{∗}5 | | 35 | 35 | 35 |
| | Age resistor ^{∗}6 | | 2 | 2 | 2 |
| | Silane coupling agent ^{∗}7 | | 4 | 4 | 4 |
| | Vulcanization accelerator ^{∗}8 | | 5 | 5 | 5 |
| | Sulfur | | 2 | 2 | 2 |
| Evaluation results | Cut resistance (index) | Index | 100 | 136 | 112 |
| | Elongation fatigue resistance (index) | Index | 100 | 111 | 107 |

**Table 4**

| | | | Comparative Example 4-1 | Example 4-1 | Example 4-2 | Comparative Example 4-2 | Example 4-3 | Example 4-4 | Comparative Example 4-3 | Example 4-5 | Example 4-6 | Comparative Example 4-4 | Example 4-7 | Example 4-8 |
|---|---|---|---|---|---|---|---|---|---|---|---|---|---|---|
| Components | Natural rubber ^{∗}1 | Part by mass | 100 | 100 | 100 | 100 | 100 | 100 | 100 | 100 | 100 | 100 | 100 | 100 |
| | Sorbitan monoester ^{∗}2 | | - | 1 | 2 | - | 1 | 2 | - | 1 | 2 | - | 1 | 2 |
| | Carbon black ^{∗}4 | | 10 | 10 | 10 | 10 | 10 | 10 | 10 | 10 | 10 | 10 | 10 | 10 |
| | Silica ^{∗}5 | | 20 | 20 | 20 | 20 | 20 | 20 | 40 | 40 | 40 | 40 | 40 | 40 |
| | Age resistor ^{∗}6 | | 2 | 2 | 2 | 2 | 2 | 2 | 2 | 2 | 2 | 2 | 2 | 2 |
| | Silane coupling agent ^{∗}7 | | 0.8 | 0.8 | 0.8 | 2.4 | 2.4 | 2.4 | 1.6 | 1.6 | 1.6 | 4.8 | 4.8 | 4.8 |
| | Vulcanization accelerator ^{∗}8 | | 5 | 5 | 5 | 5 | 5 | 5 | 5 | 5 | 5 | 5 | 5 | 5 |
| | Sulfur | | 2 | 2 | 2 | 2 | 2 | 2 | 2 | 2 | 2 | 2 | 2 | 2 |
| Evaluation results | Cut resistance | Index | 100 | 149 | 123 | 100 | 149 | 123 | 100 | 149 | 123 | 100 | 149 | 123 |

| | | | | | | | | | | | | | | |
|---|---|---|---|---|---|---|---|---|---|---|---|---|---|---|
| * 1 Natural rubber: RSS #3 * 2 Sorbitan monoester: sorbitan monostearate, manufactured by Kao Corporation, "RHEODOL AS-10V", number of hydroxyl groups: 3 * 3 Sorbitol: manufactured by KANTO CHEMICAL CO.,INC., number of hydroxyl groups: 6 * 4 Carbon black: N234, manufactured by Mitsubishi Chemical Corporation, "DIABLACK N234" * 5 Silica: manufactured by Tosoh Silica Corporation, "NIPSIL AQ" * 6 Age resistor: N-Phenyl-N'-(1,3-dimethylbutyl)-p-phenylenediamine, manufactured by Ouchi Shinko Chemical Industrial Co., Ltd., "NOCRAC 6C" * 7 Silane coupling agent: bistriethoxysilylpropyl polysulfide, manufactured by Shin-Etsu Chemical Co., Ltd. * 8 Vulcanization accelerator: N-cyclohexyl-2-benzothiazolesulfenamide, manufactured by Sanshin Chemical Industry Co., Ltd., "Sanceler CM-G" * 9 Styrene butadiene rubber: manufactured by Asahi Kasei Corporation, "Tufdene 2000" | | | | | | | | | | | | | | |

From the results in Table 1, it is understood that the rubber compositions of all Examples achieved both elongation fatigue resistance and cut resistance at a high level. On the other hand, the rubber compositions of Comparative Examples had inferior results compared with Examples in any one of the evaluation items, and they were found difficult to achieve both excellent elongation fatigue resistance and excellent cut resistance.

From the results in Table 2, it is understood that each sample of Example containing a specific amount of sorbitan monoester had excellent results in both elongation fatigue resistance and cut resistance as compared with each sample of Comparative Example containing no sorbitan monoester.

From the results in Table 3, it is understood that, even with a high silica content, the rubber composition of each Example achieved both elongation fatigue resistance and cut resistance at a high level. On the other hand, the rubber compositions of Comparative Examples had inferior results compared with Examples in any one of the evaluation items, and they were found difficult to achieve both excellent elongation fatigue resistance and excellent cut resistance.

From the results in Table 4, it is understood that, even with a high silica content, the rubber composition of each Example had excellent results in terms of cut resistance. On the other hand, the rubber compositions of Comparative Examples had inferior results in cut resistance as compared with Examples.

### INDUSTRIAL APPLICABILITY

According to the present disclosure, it is possible to provide a rubber composition being excellent in cut resistance while maintaining good elongation fatigue resistance. Further, according to the present disclosure, it is possible to provide a tire with excellent cut resistance while maintaining good elongation fatigue resistance.

## Claims

1. A rubber composition, comprising a rubber component containing 70 % by mass or more of natural rubber, a filler containing at least silica, and a cyclic polyol compound having a hydrocarbyl group of 0.1 parts by mass to 2 parts by mass with respect to 100 parts by mass of the natural rubber in the rubber component.

2. The rubber composition according to claim 1, wherein the cyclic polyol compound having a hydrocarbyl group is a cyclic polyol compound having a hydrocarbyl ester group.

3. The rubber composition according to claim 1, wherein the cyclic polyol compound having a hydrocarbyl group has two or more hydroxyl groups.

4. The rubber composition according to claim 1, wherein the cyclic polyol compound having a hydrocarbyl group is a compound represented by the following formula (1), 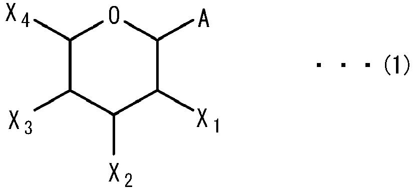 where A is a hydrocarbyl ester group having 6 to 30 carbon atoms or a hydrocarbyl ether group having 6 to 30 carbon atoms, and X₁, X₂, X₃ and X₄ are each independently -OH or -R where -R is -H or -CH₂OH, provided that at least three of X₁, X₂, X₃ and X₄ are -OH.

5. The rubber composition according to claim 4, wherein the cyclic polyol compound having a hydrocarbyl group has 12 to 24 carbon atoms in the hydrocarbyl group portion of A in the formula (1).

6. The rubber composition according to any one of claims 1 to 5, wherein the cyclic polyol compound having a hydrocarbyl group has a melting point of 40 °C to 100 °C.

7. The rubber composition according to any one of claims 1 to 6, further comprising a linear polyhydric alcohol.

8. The rubber composition according to claim 7, wherein a content of the linear polyhydric alcohol is 0.5 parts by mass to 6 parts by mass with respect to 100 parts by mass of the natural rubber in the rubber component.

9. The rubber composition according to any one of claims 1 to 8, wherein a content of the silica is 5 parts by mass to 100 parts by mass with respect to 100 parts by mass of the rubber component.

10. The rubber composition according to any one of claims 1 to 9, wherein the filler further contains carbon black, and a content of the carbon black with respect to a content of the silica is 0.1 to 4 in mass ratio.

11. The rubber composition according to any one of claims 1 to 10, wherein the rubber composition further comprises a silane coupling agent, and a content of the silane coupling agent with respect to a content of the silica is 0.2 or less in mass ratio.

12. The rubber composition according to any one of claims 1 to 11, further comprising glycerol monostearate.

13. A tire, using the rubber composition according to any one of claims 1 to 12 in a tread portion.

14. The tire according to claim 13, wherein the tire is a tire for construction vehicles.
